(19) Europäisches Patentamt
European Patent Office
Office européen des brevets

(11) **EP 2 987 000 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(21) Anmeldenummer: **14713843.2**

(22) Anmeldetag: **28.03.2014**

(51) Int Cl.:
*G01S 17/36* (2006.01)   *G01S 17/46* (2006.01)
*G01S 7/48* (2006.01)

(86) Internationale Anmeldenummer:
**PCT/EP2014/056359**

(87) Internationale Veröffentlichungsnummer:
**WO 2014/170118 (23.10.2014 Gazette 2014/43)**

(54) **VERFAHREN ZUR OPTISCHEN ABSTANDSMESSUNG IM NAH- UND FERNBEREICH**

METHOD FOR OPTICALLY MEASURING DISTANCES IN THE NEAR AND FAR RANGE

PROCÉDURE DE MESURE OPTIQUE DE DISTANCE EN ZONE PROCHE ET EN ZONE LOINTAINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2013 PCT/EP2013/058010**

(43) Veröffentlichungstag der Anmeldung:
**24.02.2016 Patentblatt 2016/08**

(73) Patentinhaber: **Mechaless Systems GmbH
76646 Bruchsal (DE)**

(72) Erfinder: **HILL, Uwe Hendrik
75196 Remchingen (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
EP-A1- 2 455 776   WO-A1-2006/024566
DE-A1-102004 037 137   DE-A1-102007 005 187
US-A- 4 699 507

**Beschreibung**

Die Erfindung betrifft ein Verfahren zur optischen Abstandsmessung im Nah- und Fernbereich und insbesondere ein Verfahren zur Ermittlung des Abstandes eines für elektromagnetische Strahlung reflektiv und/oder transmissiv wirkenden Objekts zu einem optisch arbeitenden Sensorsystem, dessen optischer Erfassungsbereich in zumindest einen Nah- und einen Fernbereich unterteilbar ist.

Für die Erkennung dreidimensionaler Gesten wie beispielsweise Wisch- und Annäherungsgesten werden Sensoren benötigt, die in der Lage sind, die Position, Bewegung und Orientierung von Händen zu erfassen.

Neben der Verwendung von Kameras ist die Verwendung einfacher, auf LEDs und Fotodioden basierenden Konzepten aufgrund der damit verbundenen Kosten von besonderem Interesse.

Ein wesentliches Problem, das aus dem Stand der Technik bekannt ist, ist dabei die Messung im Nahbereich bei gleichzeitiger guter Gestenerkennung im Fernbereich. Solche Verfahren sind beispielsweise aus der DE-A-103 00 224 oder DE-A-10 2006 020 570 bekannt.

Aufgrund der Lichtgeschwindigkeit bzw. der daraus resultierenden kurzen Lichtlaufzeiten im Nahbereich sind optische Abstandmessungen gerade bei kleinen Abständen auf der Basis von Laufzeitmessungen sehr schwierig bzw. nur mit großem technischen Aufwand zu realisieren.

Bei großem Abstand können Laufzeitverfahren wie beispielsweise die aus EP-B-1 913 420 oder DE-A-10 2007 005 187 bekannten verwendet werden. Sys teme zur Ermittlung mindestens einer physikalischen Größe anhand der Beziehung zwischen einem Sende- und einem Empfangssignal sind aus DE-A-10 2006 057 495 und DE-A-198 51 307 bekannt.

Gerade im Hinblick auf die wirtschaftlichen Randbedingungen ist derzeit aus dem Stand der Technik keine Lösung bekannt, die insbesondere unter Kostengesichtspunkten sowohl im Fern- als auch und insbesondere im Nahbereich die kommerziellen und technischen Randbedingungen für eine optische Abstandsmessung erfüllt, die beispielsweise für eine einfache Gestenerkennung eingesetzt werden kann. Eine typische Anwendung einer solchen Technik ist beispielsweise die Steuerung von Menus eines Bildschirms oder andere Funktionen, die heute typischerweise mit Hilfe einer Maus gesteuert werden.

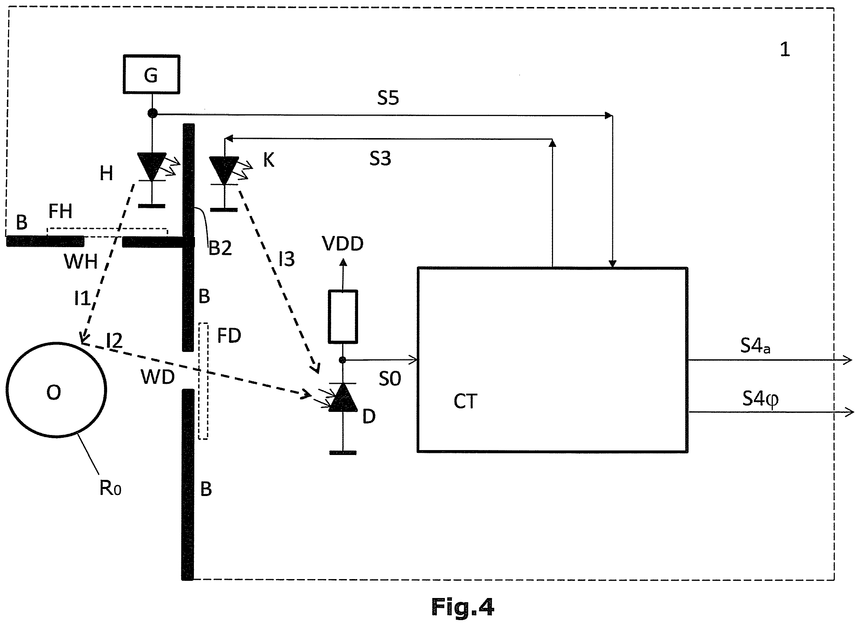

Aus dem Stand der Technik (Fig. 4) sind dabei Systeme bekannt, bei denen ein Generator G ein Senderspeisesignal S5 erzeugt, mit dem ein Nutzsender H gespeist wird. Dieser Nutzsender H strahlt in einen Empfänger D nach Durchgang durch die zu vermessende Messstrecke, die aus I1und I2 besteht. Das Empfängerausgangssignal S0 des Empfängers D wird durch einen Regler CT zu einem Kompensationsspeisesignal S3 verarbeitet, mit dem ein Kompensationssender K gespeist wird, der wieder typischerweise linear überlagernd über die Kompensations-Übertragungsstrecke I3 ebenfalls in den Empfänger D einstrahlt. Das Kompensationsspeisesignal S3 wird dabei in der Art durch den Regler CT aus dem Empfängerausgangssignal S0 und dem Senderspeisesignal S5 erzeugt, dass das Sendeausgangssignal S0 bis auf einen Regelfehler und das Systemrauschen keine Komponenten des Senderspeisesignals S5 mehr enthält. Dabei regelt der Regler das Kompensationsspeisesignal S3 nicht nur in der Amplitude, sondern auch in der Phase kompensierend. Der Regler gibt dabei typischerweise zwei Regelsignale S4a und S4φ aus, die die Amplitude (Regelsignal S4a) und die Phase (Regelsignal S4φ) des Kompensationssignals repräsentieren.

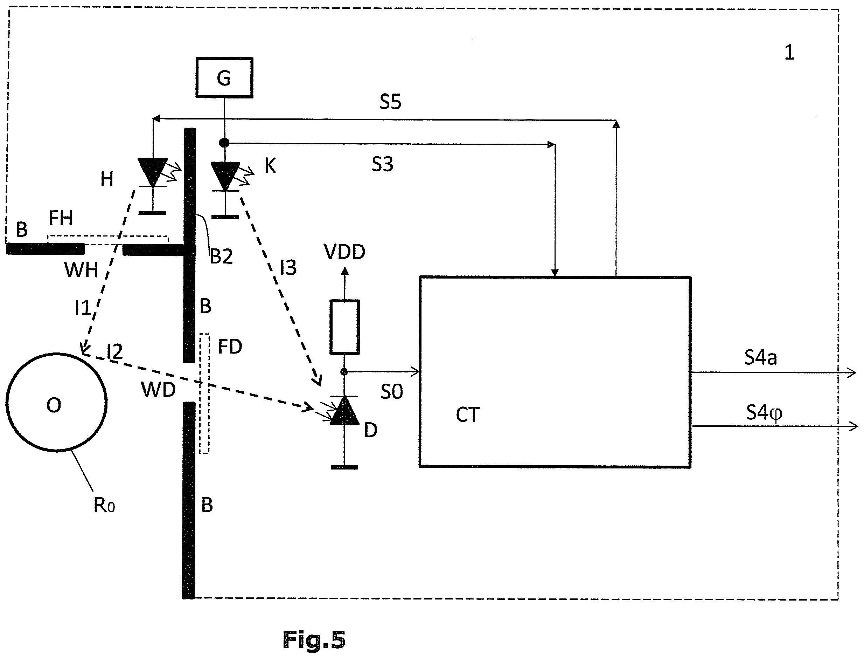

Ebenso sind aus dem Stand der Technik Systeme (Fig. 5) bekannt, bei denen ein Generator G ein Kompensationsspeisesignal S3 erzeugt, mit dem der Kompensationssender K gespeist wird. Dieser Kompensationssender K strahlt in einen Empfänger D nach Durchgang durch die Kompensations-Übertragungsstrecke I3 ein. Das Empfängerausgangssignal S0 des Empfängers D wird durch einen Regler CT zu einem Senderspeisesignal S5 verarbeitet, mit dem ein Nutzsender H gespeist wird, der wieder typischerweise linear überlagernd nach Durchgang durch den ersten Teilabschnitt I1 der Messstrecke I1,I2 Reflektion an einem Objekt O oder Durchgang durch das Objekt O und nachfolgendem Durchgang durch den zweiten Teilabschnitt I2 der Messstrecke I1,I2 ebenfalls in den Empfänger D einstrahlt. Es ist im Übrigen auch denkbar, dass die Fluoreszenz des Objektes O erfasst werden soll, dessen Emission also das zu detektierende Signal bildet. Das Senderspeisesignal S5 wird dabei in der Art durch den Regler CT aus dem Empfängerausgangssignal S0 und dem Kompensationsspeisesignal S3 erzeugt, dass das Sendeausgangssignal S0 bis auf einen Regelfehler und das Systemrauschen keine Komponenten des Kompensationsspeisesignals S3 mehr enthält. Dabei regelt der Regler das Senderspeisesignal S5 nicht nur in der Amplitude, sondern auch in der Phase kompensierend. Der Regler gibt dabei typischerweise zwei Regelsignale S4a und S4φ aus, die die Amplitude (Regelsignal S4a) und die Phase (Regelsignal S4φ) des Sendesignals repräsentieren.

Mischungen dieser beiden grundsätzlichen Verfahren, die in den zuvor genannten Schriften beschrieben sind, insbesondere auch mit Regelung von Sender und/oder Kompensationssender sind denkbar.

Solche Systeme, im Folgenden HALIOS-IRDM-Systeme genannt, sind besonders robust gegenüber Störquellen, wie beispielsweise Sonnenlicht bei gleichzeitiger Robustheit gegenüber Verschmutzungen und einer Drift des Empfängers D.

Das Phasensignal S4φ repräsentiert die Lichtlaufzeit, die das Messsignal für das Passieren der Messstrecke, bestehend aus den Teilabschnitten I1 und I2, benötigt.

Das Amplitudensignal S4a repräsentiert die Schwächung, die das Messsignal beim Durchgang durch die Messstrecke mit den Teilabschnitten I1 und I2 erfährt.

Aufgabe der Erfindung

Die Erfindung stellt sich die Aufgabe, ein einfaches gegenüber Fremdlichtstörungen robustes Messsystem zur Verfügung zu stellen, dass sowohl im Nah- als auch im Fernbereich gute Messwerte für den Abstand des Objekts zum Sensorsystem und damit gute Erkennungsergebnisse liefert.

Diese Aufgabe wird erfindungsgemäß mit einem Verfahren nach Anspruch 1 und einer Vorrichtung nach Anspruch 8 gelöst; einzelne Ausgestaltungen der Erfindung sind Gegenstand der Unteransprüche.

Beschreibung der Erfindung

Bei der Erfindung wird von einem Sensorsystem zur optischen Abstandsmessung ausgegangen, das einen Sender zum Aussenden eines optischen Signals (elektromagnetische Strahlung) und einen Empfänger zum Empfang eines bzw. des optischen Signals (elektromagnetische Strahlung) aufweist. Ein sich in dem dem Sensorsystem vorgelagerten Erfassungsbereich befindendes Objekt leitet die elektromagnetische Strahlung, die von dem Sender ausgeht, an den Empfänger weiter. Anhand der mittels einer Auswerteeinheit erzeugten Signalamplitude oder der Signallaufzeit kann nun auf den Abstand des Objekts zum Sensorsystem bzw. zum Empfänger geschlossen werden. Soll auf diese Art und Weise die Position eines Objekts im Raum oder in der Fläche (3D- bzw. 2D-Anwendung) ermittelt werden, bedarf es einer entsprechenden Anzahl von Sendern, die zweckmäßigerweise sukzessive und sich zyklisch wiederholend oder in einer den aktuellen Verhältnissen angepasst veränderlichen Reihenfolge angesteuert werden. Über einen Kompensationssender lassen sich Umgebungslichteinflüsse kompensieren, was allerdings grundsätzlich bekannt ist.

Nach der Erfindung ist nun bei einem derartigen System vorgesehen, dass

- der Erfassungsbereich zumindest in einen Fernbereich und in einen Nahbereich unterteilt ist,
- ein Objekt (O) bei Annäherung an das Sensorsystem zunächst durch den Fernbereich und anschließend durch den Nahbereich des Erfassungsbereichs bewegt wird,
- bei sich im Fernbereich befindendem Objekt (O) dessen Abstand zum Sensorsystem anhand der Laufzeitinformation des empfangenen optischen Signals ermittelt wird und
- bei sich im Nahbereich befindendem Objekt (O) dessen Abstand zum Sensorsystem auf der Grundlage eines angenommenen Werts oder eines berechneten Werts für den optischen Parameter des Objekts (O) und anhand der Amplitudeninformation des empfangenen optischen Signals ermittelt wird.

Wesentliches Merkmal der Erfindung ist es, dass in Abhängigkeit von der Genauigkeit, mit der aus dem empfangenen optischen Signal die Signalamplituden- und Signallaufzeitinformationen extrahiert werden können, entweder die Signalamplitudeninformation oder die Signallaufzeitinformation genutzt wird, um den Abstand des Objekts zum Sensorsystem (bzw. genauer gesagt zu dessen Empfänger) zu ermitteln. Dabei besteht die Schwierigkeit in der Abstandsmessung anhand der Signalamplitudeninformation darin, dass der optische Parameter des Objekts, der dessen Reflektions- und/oder Transmissionsvermögen beschreibt, nicht genau bekannt ist. Dieser Parameter muss zunächst berechnet werden, wobei man auch mit einem angenommenen Wert als "Startwert" arbeiten kann. Dabei wird die Erkenntnis ausgenutzt, dass sich dieser optische Parameter auf Grund der Tatsache berechnen lässt, dass ein sich dem Sensorsystem näherndes Objekt zunächst dessen Fernerfassungsbereich und anschließend dessen Naherfassungsbereich durchfährt. Im Fernerfassungsbereich aber lässt sich die Abstandsermittlung recht genau anhand der Signallaufzeitinformation ermitteln. Wenn man dann in die Berechnungsvorschrift für die Abstandsermittlung auf Basis der Signalamplitudeninformation den zuvor anhand der Signallaufzeitinformation errechneten Abstandswert als bekannt vorgibt, lässt sich der optische Parameter (Reflektions- und/oder Transmissionskoeffizient) des Objekts berechnen. Dieser berechnete Wert steht dann in der Folge zur Verfügung, um dann, wenn das Objekt den Erfassungsnahbereich des Sensorsystems erreicht, die Abstandsermittlung anhand der Signalamplitudeninformation durchzuführen. Denn im Naherfassungsbereich des Sensorsystems lässt sich die Abstandsermittlung auf Basis der Signalamplitudeninformation des empfangenen optischen Signals einfacher durchführen als unter Zuhilfenahme der Signallaufzeitinformation.

In weiterer vorteilhafter Ausgestaltung der Erfindung kann also vorgesehen sein, dass bei sich im Fernbereich befindendem Objekt (O) der optische Parameter berechnet wird, und zwar anhand des auf Basis der Laufzeitinformation des empfangenen optischen Signals ermittelten Abstands des Objekts (O) zum Sensorsystem und der Amplitudeninformation des empfangenen optischen Signals.

Zweckmäßig ist es ferner, wenn der optische Parameter des Objekts (O) mit dessen Annäherung an das Sensorsystem jeweils aktualisiert wird. Durch laufende Berechnung des optischen Parameters des Objekt bei Annäherung desselben an das Sensorsystem, solange sich das Objekt noch im Fernerfassungsbereich befindet, kann der optische Parameter des Objekts immer genauer bestimmt werden.

In weiterer vorteilhafter Ausgestaltung der Erfindung kann vorgesehen sein, dass der aktualisierte optische Parameter jeweils gespeichert und für die nachfolgende Ermittlung des Abstands des sich im Nahbereich befindenden Objekts zum Sensorsystem genutzt wird. Zusätzlich bzw. alternativ kann auch ein Wert für den optischen Parameter in Abhängigkeit von der an sich bekannten optischen Beschaffenheit der zu erwartenden Objekte, deren Abstand zum Sensorsystem zu ermitteln sind, vorgegeben werden. Bei Anwendung der Erfindung zur Gestenerkennung kann beispielsweise der Reflektionskoeffizient für Haut, der sich bei der verwendeten Strahlung (Wellenlänge) einstellt, vorgegeben sein. Problematisch hierbei könnte allerdings sein, dass dieser Reflektionskoeffizient in Abhängigkeit von der Hautfarbe verschieden ist. In einem derartigen Fall könnte man die anfänglichen Berechnungen, wie sie oben beschrieben sind, für unterschiedliche angenommene Reflektionskoeffizienten durchführen, um dann anhand der sich mit diesen unterschiedlichen Koeffizienten ergebenden Abstandswerten bei Abgleich mit dem durch die Laufzeitinformation ermittelten Abstandswert den "passenden" Reflektionskoeffizienten zu ermitteln, der dann in der Folge für die Abstandsmessung anhand der Signalamplitudeninformation verwendet wird, wenn sich das Objekt im Nahbereich befindet.

Die Unterteilung des Erfassungsbereichs in den Nahbereich und in den Fernbereich erfolgt, was deren Grenzen betrifft, zweckmäßigerweise anhand einer Betrachtung der Fehler, mit denen die Abstandsermittlungen einerseits anhand der Signalamplitudeninformation und andererseits anhand der Signallaufzeitinformation behaftet sind. Grundsätzlich gilt, wie oben beschrieben, dass die Abstandsermittlung anhand der Signallaufzeitinformation umso genauer ist, je weiter das Objekt vom Sensorsystem entfernt ist. Es existiert also ein Entfernungsgrenzwert, ab dem der Fehler, der bei der Abstandsermittlung anhand der Signallaufzeitinformation auftreten kann, einen bestimmten unteren Grenzwert überschreitet. Bis zu diesem Entfernungswert erstreckt sich also der Fernbereich bzw. ab diesem Entfernungsgrenzwert beginnt der Nahbereich, der sich dann bis zur Oberfläche des Sensorsystems erstreckt. Man könnte allerdings auch noch einen dritten, nämlich mittleren oder Zwischenentfernungsbereich definieren, der zwischen dem Nah- und dem Fernbereich angeordnet ist. Innerhalb dieses Zwischenbereichs liefern beide Abstandsermittlungsmethoden jeweils Abstandwerte mit Fehlern, die sich innerhalb eines vorgebbaren Fehlerbereichs bewegen. In diesem Zwischenbereich, der auf die oben beschriebene Art und Weise innerhalb des Erfassungsbereichs lokalisierbar ist, kann also entweder auf die eine oder auf die andere Berechnungsmethode zurückgegriffen werden, um den Abstand des Objekt zum Sensorsystem zu ermitteln.

Wie sich aus dem Vorstehenden ergibt, liegt der Erfindung also die Erkenntnis zugrunde, dass sowohl das Phasensignal S4φ, das ja, wie gesagt, die Lichtlaufzeit und damit den Abstand repräsentiert, als auch das Amplitudensignal S4a, das eigentlich die Schwächung, die das Messsignal erfährt, repräsentiert, Informationen enthalten, die vom Abstand abhängig sind. Die Messfehler hängen dabei erheblich vom Abstand des Sensorsystems zum Objekt O ab.

Ein wesentliches Problem stellt der Reflektionsgrad $R_0$ des Objekts O dar, der die Abstandsmessung über das Amplitudensignal S4a verfälscht. Eine zuverlässige absolute Abstandsmessung auf der Basis vom Amplitudensignal S4a war bisher nicht generell möglich, da die Amplitude des Sensorsignals vom Reflektionsgrad $R_0$ des Objekts O abhängt und dieser im Allgemeinen nicht bekannt ist. Im Gegensatz dazu kann prinzipiell das Phasensignal S4φ zur Abstandsmessung herangezogen werden, ist aber im Nahbereich zunehmend verrauscht und hat daher eine begrenzte Auflösung.

Erfindungsgemäß werden diese beiden Signale zu einem gemeinsamen Ausgangssignal kombiniert, um sämtliche Vorteile der beiden Einzelsignale zusammen zu erhalten.

Der wesentliche erfinderische Schritt besteht jedoch in der Elimination des Reflektionsgrads $R_0$ des Objektes, dessen Abstand bestimmt werden soll, aus den Gleichungen. Hierzu wird die bisher fehlende Information über den Reflektionsgrad $R_0$ aus der Betrachtung des Phasensignals S4φ gewonnen. Der Wert, den das Amplitudensignal S4a repräsentiert, kann somit rechnerisch korrigiert werden.

Unter der Voraussetzung, dass sich der Nutzsender H, der Kompensationssender K und der Empfänger D an etwa dem gleichen Ort im Vergleich zum zu vermessenden Objekt O befinden, kann angenommen werden, dass die Größe des Amplitudensignals S4a von der inversen vierten Potenz des Abstands des Sensorsystems zum Objekt abhängt.

Das Amplitudensignal S4a wird also im Nahbereich besonders groß, während die Laufzeit und damit das Phasensignal S4φ besonders klein wird. Die Präzision der Laufzeitmessung nimmt also ab und die der Amplitudenmessung zu, wenn ein konstanter Fehler beispielsweise in Folge eines im System vorhandenen Rauschpegels vorausgesetzt wird.

Die Messsignale können daher durch die folgenden Formeln angenähert werden, mit S4a als dem Amplitudensignal und S4φ als dem Phasensignal:

$$S4a = k_a R_O \frac{1}{r^4} + e_a$$

$$S4\varphi = k_\varphi r + e_\varphi$$

Hierbei stellen $k_a$ und $k_\varphi$ Systemkonstanten dar, die realisierungsspezifisch sind; $e_a$ beschreibt den Fehler bei der Amplitudenmessung, $e_\varphi$ den Fehler bei der Phasen- oder Verzögerungsmessung (Licht- oder Signallaufzeitmessung) und r beschreibt den Abstand des Objektes vom Sensor.

Aus diesen kann jeweils der gesuchte Abstand r bestimmt werden:

$$\sqrt[4]{\frac{k_a R_O}{S4a - e_a}} = r$$

$$\frac{S4\varphi - e_\varphi}{k_\varphi} = r$$

Für die Bestimmung müssen die unbekannten Fehler jedoch zu Null gesetzt werden:

$$\sqrt[4]{\frac{k_a R_O}{S4a}} = r_{ma}$$

$$\frac{S4\varphi}{k_\varphi} = r_{m\varphi}$$

Hierbei stellt $r_{ma}$ den durch das Amplitudenverfahren gemessenen Abstand und $r_{m\varphi}$ den durch das Laufzeit-verfahren gemessenen Abstand dar. Der sich dadurch jeweils ergebende absolute Fehler ($r_{ma}$-r; $r_{m\varphi}$) zum echten Abstand r ist:

$$r_{ma} - r = \sqrt[4]{\frac{k_a R_O}{S4a}} - \sqrt[4]{\frac{k_a R_O}{S4a - e_a}}$$

$$r_{m\varphi} - r = \frac{e_\varphi}{k_\varphi}$$

Der Amplitudenfehler lässt sich als Funktion des Abstands ausdrücken:

$$r_{ma} - r = r\left(\sqrt[4]{\frac{1}{1 + \dfrac{e_a r^4}{k_a R_O}}} - 1\right)$$

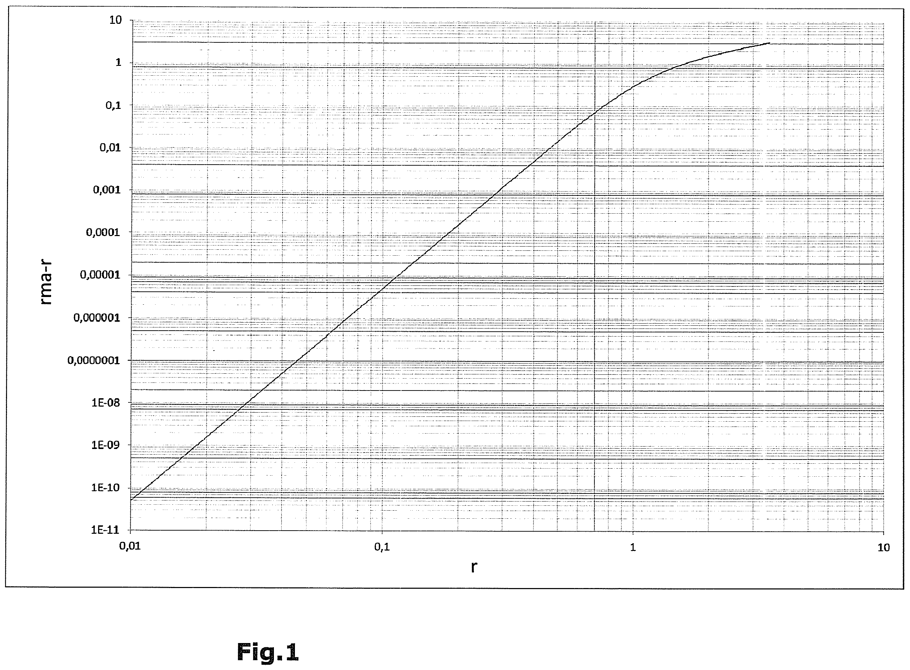

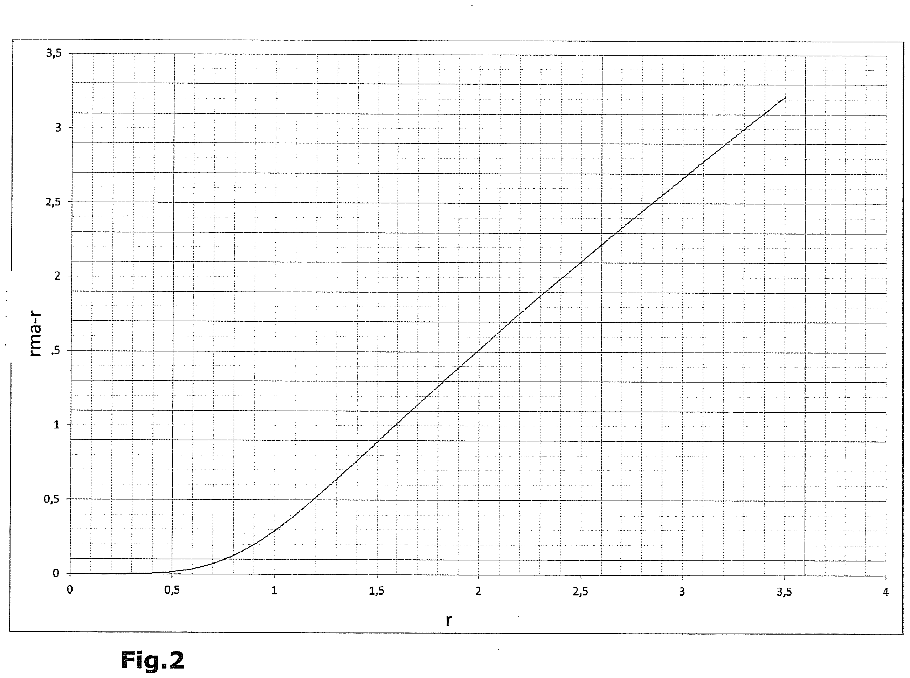

Fig. 1 zeigt den Verlauf des Fehlers $r_{ma}$-r in Abhängigkeit des Abstands r genormt auf

$$\sqrt[4]{\frac{e_a}{k_a R_O}}$$

in doppelt logarithmischer Darstellung und in Fig. 2 in linearer Darstellung.

Es ist offensichtlich, dass der Fehler für große Amplituden S4a verschwindet. Es lässt sich somit ein Koeffizient A bilden:

$$A = \left( \frac{r_{ma} - r}{r_{m\varphi} - r} \right) = \frac{k_\varphi \sqrt[4]{k_a R_O}}{e_\varphi} \frac{\sqrt[4]{S4a - e_a} - \sqrt[4]{S4a}}{\sqrt[4]{S4a} \sqrt[4]{S4a - e_a}}$$

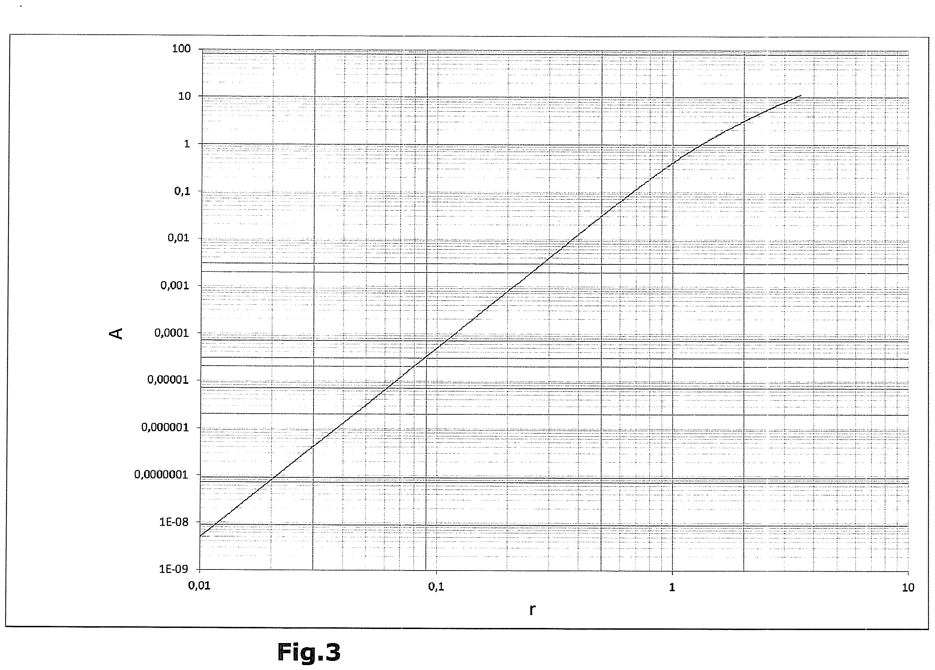

Fig. 3 zeigt den Koeffizienten A in Abhängigkeit von r genormt auf

$$\sqrt[4]{\frac{e_a}{k_a R_O}}$$

in doppelt logarithmischer Darstellung.

Für A>1 wird für die Entfernungsbestimmung des Objekts die Phasenmessung mittels des Phasensignals S4$\varphi$ bevorzugt. Für A<1 wird für die Entfernungsbestimmung des Objekts die Amplitudenmessung mittels des Amplitudensignals S4a bevorzugt.

Diese Grenze A=1 ist gegeben durch:

$$\frac{e_\varphi}{k_\varphi \sqrt[4]{k_a R_O}} \sqrt[4]{S4a_{grenz}} \sqrt[4]{S4a_{grenz} - e_a} = \sqrt[4]{S4a_{grenz} - e_a} - \sqrt[4]{S4a_{grenz}}$$

Mit

$$\sqrt[4]{S4a_{grenz} - e_a} = \sqrt[4]{S4a_{grenz}} - e_a'$$

vereinfacht sich die Gleichung zu:

$$\frac{e_\varphi}{k_\varphi \sqrt[4]{k_a R_O}} \sqrt[4]{S4a_{grenz}} \left( \sqrt[4]{S4a_{grenz}} - e_a' \right) = -e_a'$$

Daraus ergibt sich die quadratische Gleichung

$$\left( \sqrt[2]{S4a_{grenz}} - \sqrt[4]{S4a_{grenz}} e_a' \right) + e_a' \frac{k_\varphi \sqrt[4]{k_a R_O}}{e_\varphi} = 0$$

mit der Lösung

$$S4a_{grenz} = \left( -\frac{1}{2} e_a' \pm \sqrt{\frac{1}{4} e_a'^2 - e_a' \frac{k_\varphi \sqrt[4]{k_a R_O}}{e_\varphi}} \right)^2$$

Liegt das Amplitudensignal S4a über diesem Grenzwert S4a$_{grenz}$, so ist für die Entfernungsbestimmung des Objekt O die Amplitudenmessung günstiger als die Phasen- bzw. Verzögerungsmessung.

Besonders hervorzuheben ist, dass die Größe des Schwellwerts S4a$_{grenz}$ nicht von der gemessenen Phasenlage mittels des Phasensignals S4$\varphi$ sondern ausschließlich von den Werten des Systems und des Objekts O, wie Brechungsindizes und spezifische Dämpfungen der Medien in der Messstrecke, Reflektionsgrade, Streuungsverluste etc., abhängt. Hierfür müssen die Fehlerwerte $e_a$ und $e_\varphi$ sowie die Konstanten $k_a$ und $k_\varphi$ vorgegeben werden. Der Reflektionsfaktor $R_0$ des Objekts O stellt jedoch einen unbekannten Parameter dar.

Aus den obigen Überlegungen ergibt sich, dass durch die Abhängigkeiten der Raum vor einer erfindungsgemäßen Vorrichtung in mindestens drei Entfernungsbereiche geteilt wird, nämlich in

1) einen Fernbereich, in dem bei der Amplitudenmessung der Amplitudenfehler $e_a$ dominiert und der Phasenfehler $e_\varphi$ von untergeordneter Bedeutung ist,

2) einen mittleren Entfernungsbereich, in dem das Amplitudensignal S4a und das Phasensignal S4φ mit einem ähnlichen Fehler behaftet sind, und

3) einen Nahbereich, bei dem bei der Phasenmessung der Phasenfehler $e_\varphi$ dominiert und der Amplitudenfehler $e_a$ gegenüber dem Messsignal mehr oder weniger irrelevant ist.

Empirisch können die beiden Grenzen zwischen dem Fernbereich und dem mittleren Entfernungsbereich einerseits sowie dem mittleren Entfernungsbereich und dem Nahbereich andererseits mit den Lösungen der obigen Gleichung in Übereinstimmung gebracht werden. In der Realität hat es sich jedoch auch gezeigt, dass das oben vereinfachte Fehlermodell nicht immer gilt. Hier wirkt die spezielle Implementierung ein, so dass die Umschaltzeitpunkte auch im Rahmen eines Experimentes in der konkreten Anwendung systematisch ermittelt werden können.

Da ein Objekt bei Annäherung an den Sensor den mittleren Entfernungsbereich durchqueren muss, bietet dies die Möglichkeit, durch eine noch einigermaßen präzise Phasenmessung den Abstand und den Reflektionskoeffzienten $R_0$ zu bestimmen. Die Phasenmessung im Nahbereich muss daher keinen präzisen Wert mehr liefern sondern nur noch die Erkenntnis, dass sich das Objekt näher als der Grenzwert zwischen dem mittleren Entfernungsbereich und dem Nahbereich zum Sensor befindet.

Umgekehrt könnte die Amplitudenmessung im Fernbereich nur noch die Information liefern, dass das Objekt weiter als die Bereichsgrenze zwischen dem Fernbereich und dem mittleren Entfernungsbereich von dem Sensor entfernt ist.

Die Übergänge müssen darüber hinaus nicht "hart" erfolgen. Vielmehr kann das Erkennungssystem so gestaltet werden, dass es aufgrund statistischer Eigenschaften den Reflektionswert $R_0$ und den Abstand r schätzt.

Diese statistischen Eigenschaften berücksichtigen dabei den Zuverlässigkeitswert der jeweiligen Messung.

So wird der typischerweise in einem Speicher abgelegte Reflektionswert $R_0$' nur dann wesentlich verändert, wenn die Zuverlässigkeit beider Signale S4a und S4φ relativ hoch ist. Nur dann liefert das Messsystem ein zweidimensionales Signal, das die Ermittlung zweier Parameter nämlich Abstand r und Reflektionswert $R_0$ erlaubt.

Nähert sich ein Objekt von der Ferne aus an, so muss für $R_0$ zunächst ein Vorladewert angenommen werden. Die Zuverlässigkeit der Abstandsmessung mittels des Amplitudensignals S4a ist damit gering. Daher ist es sinnvoll, sowohl für $R_0$ als auch für r einen Zuverlässigkeitswert zu berechnen, um den Systemen, die die Daten verarbeiten, einen Hinweis auf die Präzision zu geben.

Es ist weiter sinnvoll, den Zuverlässigkeitswert für den gespeicherten Reflektionswert $R_0$ mit einer Zeitkonstante wieder gegen Null gehen zu lassen.

Dies ist notwendig, damit bei der nächsten Fernfelderkennung nicht mit einem falschen $R_0$ gestartet wird.

Im Fernbereich bestimmt sich die gemessene Entfernung (Abstand r) zu

$$\frac{S4\varphi}{k_\varphi} \approx r$$

Gelangt das Objekt vom Fernbereich in den mittleren Entfernungsbereich, so steigt der Vertrauenswert der Signale S4a und S4φ soweit an, dass eine zweidimensionale Messung möglich wird, und zwar mit

$$\frac{S4\varphi}{k_\varphi} \approx r$$

$$S4a\frac{S4\varphi^4}{k_a k_\varphi^{\ 4}} \approx R_O$$

Gleichzeitig kann eine Vertrauensfunktion V($R_0$, r) gebildet werden, die die Wahrscheinlichkeit eines Fehlers angibt.

Es ist sinnvoll, den gespeicherten Wert $R_0'$ nicht direkt mit dem gemessenen Wert $R_0$ mitzuführen, sondern diesen zu filtern.

Beispielsweise ist es sinnvoll, in gewissen Zeitabständen $\Delta t$ diesen Wert zu ändern:

$$R_{O}{}'_{n+1} = \frac{\sum_{i=1}^{n} k_1 (R_0 - R_0') * V(R_o, r)}{\sum_{i=1}^{n} V(R_o, r)} - k_2 R_{O}{}'_n$$

wobei diese Formel das System diskret beschreibt.

Die Differenzgleichung

$$\frac{\delta}{\delta t} R_{O}' = k_1 (R_0 - R_0') * V(R_0, r) - k_2 R_{O}'$$

beschreibt das System kontinuierlich.

Die Funktionen $S4\varphi(r)$ und $S4a(r)$ beschreiben also zwei mit dem Abstand r parametrisierte Kurven. Diese beiden Größen können sich, wie oben beschrieben, nicht beliebig verändern, wenn ein Objekt vor dem Sensorsystem bewegt wird. Vielmehr müssen sich diese Signale in der oben vorbestimmten Weise abhängig voneinander verändern.

In einer konkreten Realisierung besteht der gesamte Erfassungsbereich aus zwei ineinander übergehenden Messbereichen, nämlich aus einem vorzugsweise phasenmessenden Bereich (x m bis ca. 0,5 m) und einem sich daran anschließenden vorzugsweise intensitätsbasierten Bereich (0,5 m bis zur Oberfläche bzw. zum Sensor).

Des Weiteren ist ein Stromsparmodus sinnvoll, da die Phasenmessung einen erhöhten Energiebedarf aufweist. Hierbei wird das Intensitätssignal permanent als Messsignal verwendet und die Phasenmessung nur zeitweise oder an bestimmten Stellen r aktiviert, um die Amplitudenmessung zu kalibrieren. Insofern ist es günstig, nur für große Entfernungen ausschließlich die Phasenmessung zu verwenden.

Bei vollkommener Robustheit gegen Fremdlicht erhält man so die Reichweite und Reflektionsgradunabhängigkeit bzw. -kenntnis der Amplitudenmessung sowie deren Auflösung und Geschwindigkeit gerade im Nahbereich (<0,5m - bis zur Oberfläche des Sensorsystems).

## BEZUGSZEICHENLISTE

| | |
|---|---|
| l1 | erster Teilabschnitt der Messstrecke |
| l2 | zweiter Teilabschnitt der Messstrecke |
| l3 | Kompensations-Übertragungsstrecke |
| $R_0$ | Reflektionskoeffzient |
| $R_0'$ | gespeicherter Reflektionskoeffizient |
| S0 | Empfängerausgangssignal |
| S3 | Kompensationsspeisesignal |
| S4a | Amplituden-(Regel-)Signal |
| $S4a_{grenz}$ | Grenzwert |
| $S4\varphi$ | Phasenregelsignal |
| S5 | Nutzsenderspeisesignal |
| A | Koeffizient |
| B | Abschirmung des Sensors gegenüber Umgebungslicht |
| B2 | Abschirmung des Senders gegenüber einer direkten Einstrahlung in den Empfänger |
| CT | Regler |
| D | Empfänger |
| FD | Filter vor Fenster für Empfang des Signals vom Objekt |
| FH | Filter vor Fenster für die Aussendung des Signals des Senders |
| G | Generator |
| H | Nutzsender |
| K | Kompensationssender |

| O | Objekt |
| r | Entfernung |
| VDD | Versorgungsspannung |
| WD | Fenster für Empfang des Signals vom Objekt |
| WH | Fenster für die Aussendung des Signals des Senders |

**Patentansprüche**

1. Verfahren zur Ermittlung des Abstandes eines Objekts zu einem optisch arbeitenden, einen Erfassungsbereich abdeckenden Sensorsystem, mit

- mindestens einem Nutzsender (H) zum Aussenden eines optischen Signals,
- einem Empfänger (D) zum Empfangen des von dem mindestens einen Nutzsender (H) oder von einem der Nutzsender (H) ausgesendeten und vom Objekt (O) weitergeleiteten, z.B. reflektierten oder transmittierten, optischen Signals und
- einer Auswerteeinheit (CT) zur Erzeugung einer dem empfangenen optischen Signal zugeordneten Signalamplitudeninformation, anhand derer bei Kenntnis eines die optischen Eigenschaften des Objekts für die Weiterleitung des optischen Signals beschreibenden optischen Parameters, nämlich des Reflektions- und/oder Transmissionskoeffizienten des Objekts (O), der Abstand des Objekts (O) zu dem Sensorsystem ermittelbar ist, und einer dem empfangenen optischen Signal zugeordneten Signallaufzeitinformation, anhand derer ebenfalls der Abstand des Objekts zum Sensorsystem ermittelbar ist,
wobei bei dem Verfahren
- der Erfassungsbereich zumindest in einen Fernbereich und in einen Nahbereich unterteilt ist,
- ein Objekt (O) bei Annäherung an das Sensorsystem zunächst durch den Fernbereich und anschließend durch den Nahbereich des Erfassungsbereichs bewegt wird und
- bei sich im Fernbereich befindendem Objekt (O) dessen Abstand zum Sensorsystem anhand der Laufzeitinformation des empfangenen optischen Signals ermittelt wird,
**dadurch gekennzeichnet,**
- **dass** bei sich im Nahbereich befindendem Objekt (O) dessen Abstand zum Sensorsystem auf der Grundlage eines angenommenen Werts oder eines berechneten Werts für den optischen Parameter des Objekts (O) und anhand der Amplitudeninformation des empfangenen optischen Signals ermittelt wird und
- **dass** bei sich im Fernbereich befindendem Objekt (O) der optische Parameter berechnet wird, und zwar anhand des auf Basis der Laufzeitinformation des empfangenen optischen Signals ermittelten Abstands des Objekts (O) zum Sensorsystem und der Amplitudeninformation des empfangenen optischen Signals.

2. Verfahren nach Anspruch 1, **dadurch gekennzeichnet, dass** der optische Parameter des Objekts (O) mit dessen Annäherung an das Sensorsystem jeweils aktualisiert wird.

3. Verfahren nach Anspruch 2, **dadurch gekennzeichnet, dass** der aktualisierte optische Parameter jeweils gespeichert und für die nachfolgende Ermittlung des Abstands des sich im Fernbereich befindenden Objekts zum Sensorsystem genutzt wird.

4. Verfahren nach einem der Ansprüche 1 bis 3, **dadurch gekennzeichnet, dass** der Erfassungsbereich in einen Fernbereich sowie in einen Nahbereich und in einen zwischen beiden liegenden mittleren oder Zwischenentfernungsbereich unterteilt ist, in dem die Ermittlung des Abstands des Objekts zum Sensorsystem wahlweise anhand der Amplitudeninformation oder der Laufzeitinformation des empfangenen optischen Signals erfolgt.

5. Verfahren nach einem der Ansprüche 1 bis 4, **dadurch gekennzeichnet, dass** die Ermittlung des Abstands des Objekts (O) zum Sensorsystem anhand sowohl der Amplitudeninformation als auch der Laufzeitinformation des empfangenen optischen Signals jeweils mit einem Fehler behaftet ist, dass der Fehler bei der Ermittlung des Abstands des Objekts (O) zum Sensorsystem anhand der Amplitudeninformation des empfangenen optischen Signals mit größer werdendem Abstand des Objekts zum Sensorsystem kleiner und anhand der Laufzeitinformation des empfangenen optischen Signals mit kleiner werdendem Abstand des Objekts zum Sensorsystem größer wird und dass die Grenzen des Fern- und des Nahbereichs anhand von Grenzwerten von für die Ermittlung des Abstands des Objekts (O) zum Sensorsystem anhand der Amplitudeninformation und der Laufzeitinformation des empfangenen optischen Signals noch tolerierbaren Fehlern festgelegt werden.

6. Verfahren nach Anspruch 4 und 5, **dadurch gekennzeichnet, dass** die Grenzen des Zwischenentfernungsbereichs durch einen oberen und durch einen unteren Grenzwertbereich definiert sind, innerhalb dessen die Fehler liegen, wenn die Ermittlung des Abstands des Objekts (O) zum Sensorsystem anhand der Amplitudeninformation und/oder der Laufzeitinformation des empfangenen optischen Signals erfolgt.

7. Verfahren nach einem der Ansprüche 1 bis 6, **dadurch gekennzeichnet, dass** das Sensorsystem einen weiteren Sender als Kompensationssender (K) zur Kompensation eines potentiellen Einflusses von von dem Empfänger (D) empfangenem Umgebungslicht auf die Erzeugung der Signalamplitudeninformation und der Signallaufzeitinformation des empfangenen optischen Signals aufweist.

8. Vorrichtung ausgebildet zur Durchführung des Verfahrens nach einem der vorhergehenden Ansprüche, wobei die Vorrichtung ein einen Erfassungsbereich abdeckendes Sensorsystem umfasst, mit mindestens einem Nutzsender (H) zum Aussenden eines optischen Signals, einem Empfänger (D) zum Empfangen des von dem mindestens einen Nutzsender (H) oder von einem der Nutzsender (H) ausgesendeten und vom Objekt (O) weitergeleiteten, z. B. reflektierten oder transmittierten, optischen Signals und einer Auswerteeinheit (CT) zur Erzeugung einer dem empfangenen optischen Signal zugeordneten Signalamplitudeninformation, anhand derer bei Kenntnis eines die optischen Eigenschaften des Objekts für die Weiterleitung des optischen Signals beschreibenden optischen Parameters, nämlich eines Reflektions- und/oder Transmissionskoeffizienten des Objekts (O), der Abstand des Objekts (O) zu dem Sensorsystem ermittelbar ist, und einer dem empfangenen optischen Signal zugeordneten Signallaufzeitinformation, anhand derer ebenfalls der Abstand des Objekts zum Sensorsystem ermittelbar ist.

**Claims**

1. A method for detecting the distance of an object to an optically operating sensor system covering a detection range, said sensor system comprising

   - at least one useful transmitter (H) for emitting an optical signal,
   - a receiver (D) for receiving the optical signal which has been emitted by the at least one useful transmitter (H) or any one of the useful transmitters (H) and has been forwarded, e.g. reflected or transmitted, from the object (O), and
   - an evaluation unit (CT) for generating signal amplitude information assigned to the received optical signal, wherein, on the basis of said signal amplitude information, with knowledge of an optical parameter describing the optical properties of the object for the forwarding of the optical signal, e.g. a reflection coefficient and/or transmission coefficient of the object (O), the distance of the object (O) to the transmitter system can be detected, and signal running-time information assigned to the received optical signal, wherein, on also the basis of said signal running-time information, the distance of the object to the transmitter system can be detected,
   wherein, in said method,
   - the detection range is divided at least into a far range and a near range,
   - an object (O), when approaching toward the sensor system, is moved first through the far range and subsequently through the near range of the detection range,
   - if the object (O) is situated in the far range, its distance to the sensor system is detected on the basis of the running-time information of the received optical signal,
   **characterized in that**
   - if the object (O) is situated in the near range, its distance to the sensor system is detected on the basis of an assumed value or a computed value of the optical parameter of the object (O) and on the basis of the amplitude information of the received optical signal, and
   - if the object (O) is situated in the far range, the optical parameter is computed, notably on the basis of the distance of the object (O) to the sensor system as detected from the running-time information of the received optical signal, and on the basis of the amplitude information of the received optical signal.

2. The method according to claim 1, **characterized in that** the optical parameter of the object (O) is respectively updated with each approach of the object (O) to the sensor system.

3. The method according to claim 2, **characterized in that** each updated optical parameter is stored and is used for the subsequent detection of the distance between the object in the far range and the sensor system.

4. The method according to any one of claims 1 to 3, **characterized in that** the detection range is subdivided into a far range and into a near range and into a medium or intermediate distance range situated between the far range and the near range, wherein, in said medium or intermediate distance range, the detection of the distance of the object to the sensor system is performed selectively on the basis of the amplitude information or the running-time information of the received optical signal.

**5.** The method according to any one of claims 1 to 4, **characterized in that** the detection of the distance of the object (O) to the sensor system on the basis of the amplitude information as well as on the basis of the running-time information of the received optical signal is in both cases afflicted by an error, that, when detecting the distance of the object (O) to the sensor system on the basis of the amplitude information of the received optical signal, such error becomes smaller with increasing distance of the object to the sensor system and, when detecting said distance on the basis of the running-time information of the received optical signal, such error becomes larger with decreasing distance of the object to the sensor system, and that the boundaries of the far range and the near range are predetermined on the basis of limiting values of errors which are still tolerable for the detection of the distance of the object (O) to the sensor system on the basis of the amplitude information and the running-time information of the received optical signal.

**6.** The method according to claim 4 and 5, **characterized in that** the boundaries of the intermediate distance range are defined by an upper and by a lower limiting-value range within which the errors are situated when the detection of the distance of the object (O) to the sensor system is performed on the basis of the amplitude information and/or on the basis of the running-time information of the received optical signal.

**7.** The method according to any one of claims 1 to 6, **characterized in that** the sensor system comprises a further transmitter as a compensation transmitter (K) provided to compensate for a potential influence of ambient light received by the receiver (D) on the generation of the signal amplitude information and the signal running-time information of the received optical signal.

**8.** A device configured for performing the method according to any one of the preceding claims, wherein the device comprises a sensor system covering a detection range and comprising at least one useful transmitter (H) for emitting an optical signal, a receiver (D) for receiving the optical signal which has been emitted by the at least one useful transmitter (H) or any one of the useful transmitters (H) and has been forwarded, e.g. reflected or transmitted, from the object (O), and an evaluation unit (CT) for generating signal amplitude information assigned to the received optical signal, wherein, on the basis of said signal amplitude information, with knowledge of an optical parameter describing the optical properties of the object for the forwarding of the optical signal, e.g. a reflection coefficient and/or transmission coefficient of the object (O), the distance of the object (O) to the transmitter system can be detected, and signal running-time information assigned to the received optical signal, wherein, on also the basis of said signal running-time information, the distance of the object to the transmitter system can be detected.

**Revendications**

**1.** Procédé de détermination de la distance d'un objet par rapport à un système de capteur opérant de manière optique et couvrant une zone de capture, comprenant

- au moins un émetteur (H) émettant un signal optique,
- un récepteur (D) recevant le signal optique de l'au moins un émetteur (H) ou le signal optique émis par l'émetteur (H) et redirigé, par exemple réfléchi ou transmis, par l'objet (O) et
- une unité de traitement (CT) obtenant une information d'amplitude de signal attribuée au signal optique reçu, à l'aide de laquelle la distance de l'objet (O) par rapport au système de capteur peut être déterminée lorsqu'est connu un des paramètres optiques décrivant les propriétés optiques de l'objet pour la redirection du signal optique, à savoir le coefficient de réflexion et/ou de transmission de l'objet (O), et une information de temps de propagation du signal attribuée au signal optique reçu à l'aide de laquelle la distance de l'objet par rapport au système de capteur peut également être déterminée,
dans lequel, lors du procédé
- la zone de capture est subdivisée en au moins une zone éloignée et une zone proche,
- un objet (O) est ensuite mû à travers la zone proche et subséquemment à travers la zone éloignée de la zone de capture lors de l'approche vers le système de capteur et
- lorsque l'objet (O) se trouve dans la zone éloignée, sa distance par rapport au système de capteur est déterminée à l'aide de l'information de temps de propagation du signal optique reçu,

**caractérisé**

- **en ce que** lorsque l'objet (O) se trouve dans la zone proche, sa distance par rapport au système de capteur est déterminée en se basant sur une valeur acquise ou une valeur calculée pour le paramètre optique de l'objet et à l'aide de l'information d'amplitude du signal optique reçu et

- **en ce que** lorsque l'objet (O) se trouve dans la zone éloignée, le paramètre optique est calculé, et ce à l'aide de la distance de l'objet (O) par rapport au système de capteur déterminée en se basant sur l'information de temps de propagation du signal optique reçu et de l'information d'amplitude du signal optique reçu.

2. Procédé selon la revendication 1, **caractérisé en ce que** le paramètre optique de l'objet (O) est actualisé respectivement lorsque celui-ci est approché du système de capteur.

3. Procédé selon la revendication 2, **caractérisé en ce que** le paramètre optique actualisé est respectivement enregistré et utilisé pour la détermination suivante de la distance de l'objet se trouvant dans la zone éloignée par rapport au système de capteur.

4. Procédé selon l'une des revendications 1 à 3, **caractérisé en ce que** la zone de capture est subdivisée en une zone éloignée ainsi qu'en une zone proche et une zone médiane ou d'éloignement intermédiaire se trouvant entre les deux, la détermination de la distance de l'objet par rapport au système de capteur s'effectue au choix à l'aide de l'information d'amplitude ou de l'information de temps de propagation du signal optique reçu.

5. Procédé selon l'une des revendications 1 à 4, **caractérisé en ce que** la détermination de la distance de l'objet (O) par rapport au système de capteur, que ce soit à l'aide de l'information d'amplitude ou de l'information de temps de propagation du signal optique reçu, est affectée d'une erreur, **en ce que** lors de la détermination de la distance de l'objet (O) par rapport au système de capteur à l'aide de l'information d'amplitude du signal optique reçu, l'erreur diminue lorsque la distance de l'objet par rapport au système de capteur augmente et lors de la détermination de la distance de l'objet par rapport au système de capteur à l'aide de l'information de temps de propagation du signal optique reçu l'erreur augmente lorsque la distance de l'objet par rapport au système de capteur diminue et **en ce que** les limites des zones proche et éloignées sont fixées à l'aide de valeurs limites d'erreurs tolérables pour la détermination de la distance de l'objet (O) par rapport au système de capteur à l'aide de l'information d'amplitude ou de l'information de temps de propagation du signal optique reçu.

6. Procédé selon les revendications 4 et 5, **caractérisé en ce que** les limites de la zone d'éloignement intermédiaire sont définies par un intervalle de valeurs limite supérieur et inférieur, à l'intérieur duquel se trouve l'erreur, lorsque la détermination de la distance de l'objet (O) par rapport au système de capteur s'effectue à l'aide de l'information d'amplitude et/ou de l'information de temps de propagation du signal optique reçu.

7. Procédé selon l'une des revendications 1 à 6, **caractérisé en ce que** le système de capteur comporte un émetteur supplémentaire en tant qu'émetteur compensateur (K) afin de compenser une influence potentielle de la lumière environnante reçue par le récepteur (D) sur l'obtention de l'information d'amplitude et de l'information de temps de propagation du signal optique reçu.

8. Dispositif réalisé pour la mise en œuvre du procédé selon l'une des revendications précédentes, dans lequel le dispositif comprend un système de capteur couvrant une zone de capture, comprenant au moins un émetteur (H) pour l'émission d'un signal optique, un récepteur (D) pour recevoir le signal optique de l'au moins un émetteur (H) ou le signal optique émis par l'émetteur (H) et redirigé, par exemple réfléchi ou transmis, par l'objet (O) et une unité de traitement (CT) pour l'obtention d'une information d'amplitude de signal attribuée au signal optique reçu, à l'aide de laquelle la distance de l'objet (O) par rapport au système de capteur peut être déterminée lorsqu'est connu un des paramètres optiques décrivant les propriétés optiques de l'objet pour la redirection du signal optique, à savoir un coefficient de réflexion et/ou de transmission de l'objet (O), et une information de temps de propagation du signal attribuée au signal optique reçu, à l'aide de laquelle la distance de l'objet par rapport au système de capteur peut également être déterminée.

**Fig.1**

**Fig.2**

EP 2 987 000 B1

Fig.3

**Fig.4**

EP 2 987 000 B1

**Fig.5**

EP 2 987 000 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10300224 A
- DE 102006020570 A
- EP 1913420 B
- DE 102007005187 A
- DE 102006057495 A
- DE 19851307 A